# EUROPEAN PATENT APPLICATION

(11) **EP 1 711 025 A2**
(43) Date of publication of application: **11.10.2006**
(21) Application number: 06112049.9
(22) Date of filing: 30.03.2006
(51) Int. Cl.: H04Q 7/34, G06F 17/30

(54) **An Apparatus And Method For Processing Information From A Telephone Network**

(30) Priority: 08.04.2005 GB 0507109
(71) Applicant: Agilent Technologies, Palo Alto, CA 94303-0870 (US)
(72) Inventor: Farrugia, Matthew, South Queensferry, Lothian EH30 9TG (GB); Voss, Juergen, HE 61476, Kronberg/Ts (DE); Kangru, Per, 2850, Naerum (DK)
(74) Representative: Coker, David Graeme

(57) **Abstract**

In a telecommunications network having a radio access network (RAN) portion and a core network (CN) portion, data records are built (32) from messages monitored in the RAN portion, each data record including at least two different predetermined types of field values, such as time, location area, cause indicative of a cause of termination of a transaction within a call for which the data record is built, subscriber identity and at least one type of service. The data records are then enriched (38) by providing further information into the data records including at least an identifier for each predetermined type of field value in the data records. An OnLine Analytical Processing (OLAP) cube (46) is generated to allow a selected subset of the enriched data records to be accessed based on a desired combination of dimensions of types of field values and/or field value identifiers and the selected subset is then accessed to enable an aggregation function for at least one predetermined measure, such as volume of service usage, to be performed on the accessed enriched data records. A user interface (50) displays the results of the aggregation function for the selected subset and allows a user to access the enriched data records and the original data records to permit further detailed analysis of a problem.

## Description

This invention relates to an apparatus and method for processing information from a telephone network, particularly, though not exclusively, to an apparatus and method for processing call record data from a telephone network.

### Background of the Invention

In modern switched telecommunications systems (in particular, modern Public Switched Telephone Networks (PSTNs) and Public Land Mobile Networks (PLMNs)) it has become common practice to provide two related but separate network infrastructures: a bearer or transmission network for carrying end-user voice and data traffic, and a signalling network for controlling the setup and release of bearer channels through the bearer network in accordance with control signals transferred through the signalling network (sometimes known as out-of-band signalling). In practice, such signalling networks comprise high-speed computers interconnected by signalling links; computer programs control the computers to provide a set of operational and signalling functions in accordance with a standardised protocol.

One example of such a signalling protocol is the Signalling System No. 7 (SS7), whether as specified by the CCITT, ANSI, ETSI (for GSM), Bellcore or similar body, such a network being herein referred to as an SS7 network. Another known signalling protocol is the General Packet Radio Service Tunnelling Protocol (GTP) used in the General Packet Radio Service (GPRS), such as is used for GSM data traffic. As is known in connection with such networks, signalling information is passed over the signalling links to carry out particular signalling conversation, or transaction. Any particular transaction requires a number of messages to be sent between two nodes in the network (endpoints of the transaction). A transaction can either carry out a procedure, such as to create a context identifier, or for hand-off control, or can request information, for example, to provide capability information. A context is a unique transaction between two end nodes that can be identified by a context identifier included in all messages relating to that transaction.

Both the SS7 and the GPRS signalling protocols belong to a class of signalling protocols characterised as consisting of a number of call models (transactions) built from a subset of messages defined by the protocol. Some of the signalling protocols in this class can be distinguished in that the messages in a call model utilise a single transactional key to uniquely identify a message belonging to the same context between the end points involved in the transaction. For example in the single key SS7 protocol the key is often a machine generated 32 bit number, whereas the GPRS Tunnelling Protocol (GTP) uses the GSM IMSI identifier plus one further digit to provide some 16 possible different contexts for a single IMSI. Of course, individual protocols have different rules for re-transmission of messages during a transaction and the conditions that must be met in order to declare a transaction as being completed successfully, completed with an error, or timed out (abandoned).

GPRS is a service that provides wireless packet data access to mobile GSM (Global System for Mobile Telecommunications) users. GPRS provides the first implementation of a packet switching technology within GSM, which is, itself, a circuit switched technology. GPRS is also an important precursor for 3G (3^{rd} Generation Mobile Technology) as it implements the packet switched core required for UMTS (Universal Mobile Telecommunications System) networks. Data rates in the order of 115 kb/s can be supported.

One of the main features of GPRS is that it reserves radio resources only when there is such a need and that these radio resources are shared by all mobile subscribers (MS's) in a cell, where a cell is the geographical area covered by a cellular base station.

In order to analyse a network's operation to determine whether it is operating efficiently, it is known to analyse individual messages to determine the quality of service according to whether the messages are delayed, require retransmission, etc. However, in order to fully determine the health of a network, it is necessary not only to consider each individual message, but also to look at a complete conversation, or transaction, which requires that all context information be available for the analysis. For example, although within a context each of the messages may be transmitted efficiently and correctly, one or more of the messages, while correct in themselves, may mean that the transaction has failed if the message states that, for example, the password is incorrect, or that an address was entered incorrectly or that a node was temporarily unavailable. In such cases, knowledge of the complete transaction that failed may allow the failures to be analysed so that the functionality of the network can be improved.

As is known in connection with SS7 networks, signaling information is passed over the signaling links. In particular, the signaling information is used by a CDR Builder to generate a Call Detail Record (CDR) which can later be analyzed. For example, the CDRs can be analyzed by reference to a particular customer of a telecommunications company (telco) operating the SS7 system, or certain types of data can be mined from Call Detail Records maintained by telcos in billing databases, for example various types of commercial information.

The CDRs may be generated by an apparatus, such as the product developed by Agilent Technologies and known as "acceSS7". This apparatus consists of a CDR Builder, a CDR Agent and a Data Management Component (DMC).The CDR Builder monitors the signaling channels of the SS7 network and generates the CDRs, which are then passed via the CDR Agent to the DMC, where they are processed and correlated to provide a database of the records that can be viewed by interested parties, for example, telcos.

Service Usage Records (SUR) may be generated in respect of data or other types of call, rather than CDRs and both SURs and CDRs are sometimes known collectively as Transaction Data Records (TDR), but the following description will refer to CDRs, even though it will be understood that this includes SURs.

As will be clear from the above discussion, however, generation of CDRs for analysis is not limited to SS7 systems and also occurs on other networks, such as UMTS. In cases where the messages on the network being monitored may be formatted in a variety of different protocols, the CDR Builder, not only has to monitor the messages, but must be able to differentiate between different protocols in order to generate the CDRs. Thus, in some cases, such an entity would include (and may be called) a Protocol Analyzer.

A basic configuration of a known network supporting GPRS is described in the 3G Technical Specification 23.002 V3.6.0 relating to Network Architecture published by the 3^{rd} Generation Partnership Project (3PP) and available at on their website at www.3gpp.com. Such a network can be considered to have a Core Network (CN) portion and a Radio Access Network (RAN) portion.

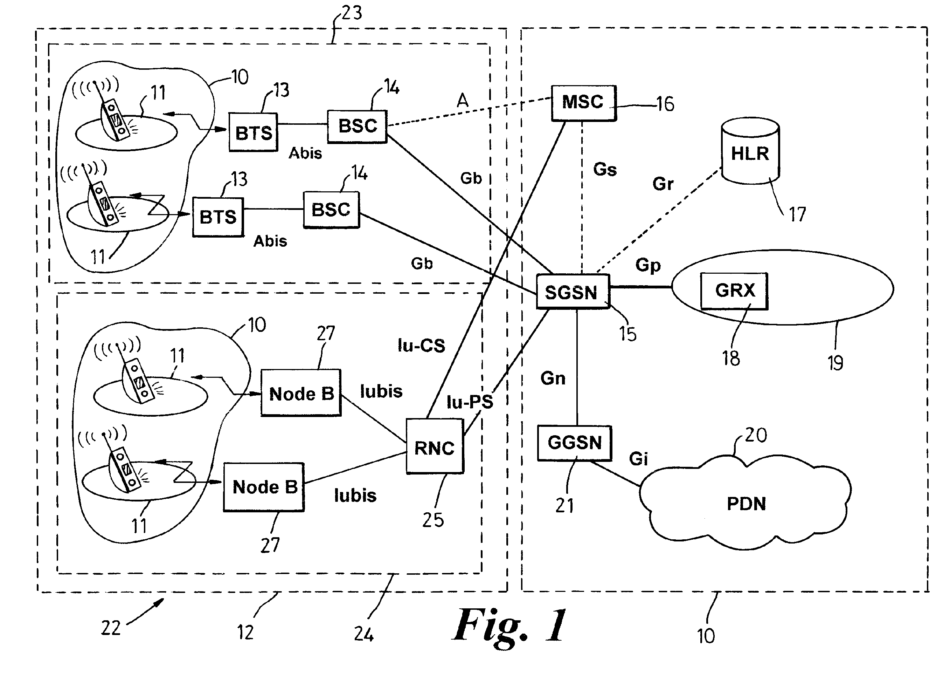

A reference model for a GPRS network 22, as known in the art, is depicted in Figure 1, having a Core Network portion 10 and a Radio Access Network portion 12. GPRS allows a Mobile Station (MS) 11 to send and receive data in an end-to-end "packet transfer" mode, without using any network resources in "circuit-switched" mode. This allows for autonomous operation of GPRS and best fits the bursty traffic characteristics. Packet routing is supported by a logical network node called a GPRS support node (GSN). The GSN is basically a packet router with additional mobility management features and connects with various network elements through standardized interfaces. The GSN node that acts as a physical interface to external Public Data Networks (PDN's) 20, such as operator networks, corporate networks, or the Internet, is known as a Gateway GSN (GGSN) 21, whereas the GSN node that connects with the Radio Access Network portion 12 and directly handles packet delivery to and from MS's 11 is known as a Serving GSN (SGSN) 15.

In this reference model, the Radio Access Network portion 12 is shown with both a Base Station System (BSS) 23, which provides a Time Division Multiple Access (TDMA) based technology to access the Mobile Stations 11 and a Radio Network System (RNS) 24, which provides a Wideband-Code Division Multiple Access (W-CDMA) based technology to access the Mobile Stations 11. The SGSN 15 can connect to either or both of these Access Network types. The Base Station System 23 includes a Base Station Controller (BSC) 14 controlling a number of Base Transceiver Stations (BTSs) 13, which are the network entities which communicate with the MS 11. The Radio Network System 24 includes Radio Network Controllers (RNCs) 25 coupled to the SGSN 15 and one or more Node B cells 27 coupled to the RNC 25. This system provides UMTS capability.

Each SGSN 15 is responsible for the delivery of packets to the MS's 11 within its service area 10. The BSC 14 is the network entity controlling a number of BTS's (Base Transceiver Stations) 13. An SGSN 15 provides a connection point for subscribers when they want to access services provided by the GPRS network 22. The SGSN 15 downloads the capabilities of the connecting MS 11 from a HLR (Home Location Register) 17, along with information such as security, billing and authentication etc. The HLR 17 is a database within the GSM network 22 which stores all the subscriber-specific data.

Also shown in Figure 1 is an MSC (Mobile Switching Centre) 16, which is the switching centre of a mobile phone network, a GRX (GPRS Roaming Exchange) 18, which is a point of connection to other GPRS networks, as well as the various links having reference names, as listed below:
**A** is an interface between the BSC 14 and the MSC 16;
**Abis** is an interface between the BSC 14 and the BTS 13 (this can be proprietary if the BSC and the BTS are from the same NEM (Network Equipment Manufacturer), which is often the case);
**Gb** is an interface between the GGSN 21 and the BSC 14, which may be implemented using Frame Relay;
**Gi** is an interface between the GGSN 21 and the PDNs 20, which may be implemented using IP;
**Gn** is an interface between the GGSN 21 and the SGSN 15, which may be implemented using IP;
**Gp** is an interface between the GGSN/SGSN 21, 15 and the GRX 18, which may be implemented using IP;
**Gr** is an interface between the SGSN 15 and the HLR 17, which may be implemented using SS7 (Signaling System 7);
**Gs** is an interface between the SGSN 15 and the MSC 16;
**lu-PS** is an interface between the SGSN 15 and the RNC 25;
**lu-CS** is an interface between the MSC 16 and the RNC 25; and
**lubis** is an interface between the RNC 25 and the Node Bs 27.
(For the avoidance of doubt it is noted that the initial character of the terms lu-PS, lu-CS and lubis is an upper case letter I - 9^{th} letter of the alphabet.)

An example of a GPRS protocol is the GPRS Tunneling Protocol (GTP), which is a transmission protocol to tunnel multi-protocol packets between GSNs. Several subscribers in the supply area of a single SGSN 15 may be simultaneously connected to a PDN 20 via the same GGSN 21. An IMSI (International Mobile Subscriber Identity) is used to uniquely identify each MS 11 in the GPRS network 22.

An MS 11 may also run several applications simultaneously; each of them requiring connection to a plurality of PDNs 20 connected to the same GGSN 21. Therefore each application must also be uniquely identified. A Network Service Access Point Identifier (NSAPI) is used for this purpose. The NSAPI is assigned when the MS 11 requests a call set-up, a process referred to as the Packet Data Protocol (PDP) Context Activation Procedure. A PDP context (i.e routing context) describes the properties of a link between the MS 11 and the GGSN 21, such as which QoS level is used for the transmission etc.

It will be appreciated that although CDRs can be analyzed to provide individual call data to indicate problems with a particular call, such analysis cannot indicate trended problems over a period of time. Analysis of the CDRs requires there to be a problem already identified in order for the cause of the problem to be analyzed. It is not possible, with present techniques, to see the overall impact of network problems on subscribers or services or the network as a whole. Furthermore, since service data (SURs) are normally only examined on the Gn interface between the GGSN 21 and the SGSN on GPRS or UMTS networks, this only gives access to tunneled IP data and does not provide an insight into the Circuit Switched services, which are of significant interest in UMTS. Also Radio Access Bearer (RAB) Quality of Service (QoS) correlation is not possible on the Gn interface. Those solutions that do focus on the cell performance of the RAN portion do not currently correlate the subscriber experience of handovers between cells with the services they were using at the time. Therefore, no insight into the potential revenue loss associated with customer dissatisfaction due to poor RAN performance is available.

### Brief Summary of the Invention

The present invention therefore seeks to provide a method and apparatus for processing information from a telephone network, which overcomes, or at least reduces the above-mentioned problems of the prior art.

Accordingly, in a first aspect, the invention provides an apparatus for analyzing data records in a telecommunications network having a radio access network (RAN) portion and a core network (CN) portion, the apparatus comprising a plurality of probes for monitoring messages at the RAN portion of the telecommunications network, a data record builder in communication with the plurality of probes for building data records from the monitored messages, each data record including at least two different predetermined types of field values, a data record enrichment module coupled to the data record builder for receiving the data records and for enriching the data records by providing further information into the data records including at least an identifier for each predetermined type of field value in the data records, an OnLine Analytical Processing (OLAP) cube generator coupled to the data record enrichment module for generating an OLAP cube allowing a selected subset of the enriched data records to be accessed based on a desired combination of dimensions of types of field values and/or field value identifiers, a processing module coupled to the OLAP cube generator for accessing the selected subset of enriched data records and for performing an aggregation function for at least one predetermined measure on the accessed enriched data records, and a user interface coupled to the processing module for allowing a user to select the subset of enriched data records and for displaying the results of the aggregation function for the selected subset.

In one embodiment the at least two different predetermined types of field values may comprise a time value and a cause value indicative of a cause of termination of a transaction within a call for which the data record is built. Alternatively, the at least two different predetermined types of field values may comprise a subscriber identity value and at least one type of service value and the predetermined measure may comprise a measure of volume of service usage.

In a different embodiment, the at least two different predetermined types of field values may comprise a time value and at least one location value and the predetermined measure may comprise a type of transfer between one location and another.

In one embodiment, the plurality of probes monitors the messages within the Radio Network System (RNS) portion of a UMTS network and/or between the RNS and CN portions of the UMTS network

In a second aspect, the invention provides an apparatus for troubleshooting a telecommunications network having a radio access network (RAN) portion and a core network (CN) portion, the apparatus comprising a plurality of probes for monitoring messages at the RAN portion of the telecommunications network, a data record builder in communication with the plurality of probes for building data records from the monitored messages, each data record including at least a time value and a cause value indicative of a cause of termination of a transaction within a call for which the data record is built, a data record enrichment module coupled to the data record builder for receiving the data records and for enriching the data records by providing further information including a cause identifier for each cause value, an OnLine Analytical Processing (OLAP) cube generator coupled to the data record enrichment module for generating an OLAP cube allowing a selected subset of the enriched data records to be accessed based on a desired combination of time values and/or cause identifiers, a processing module coupled to the OLAP cube generator for accessing the selected subset of enriched data records and for performing an aggregation function for at least one predetermined measure on the accessed enriched data records, and a user interface coupled to the processing module for allowing a user to select the subset of enriched data records and for displaying the results of the aggregation function for the selected subset.

The predetermined measure may comprise a measure of volume of service usage. Each data record may further include a handset identity value, which may comprise an International Mobile Equipment Identifier (IMEI), with the enriched data record including handset and manufacturer identifiers for each IMEI.

The predetermined measure may comprise a measure of subscriber groups.

The apparatus may further comprise an enriched data record retrieval module coupled to the user interface for retrieving the enriched data records that form the selected subset to enable the enriched data records to be further analyzed.

The apparatus may further comprise a data record retrieval module coupled to the user interface for retrieving the data records on which are based the enriched data records that form the selected subset to enable the data records to be further analyzed.

At least one of the plurality of probes may be coupled to at least one of an UMTS lub (lubis) interface and an UMTS lu interface.

In a third aspect, the invention provides an apparatus for determining subscriber profiles in a telecommunications network having a radio access network (RAN) portion and a core network (CN) portion, the apparatus comprising a plurality of probes for monitoring messages at the RAN portion of the telecommunications network, a data record builder in communication with the plurality of probes for building data records from the monitored messages, each data record including a subscriber identity value and at least one type of service value, a data record enrichment module coupled to the data record builder for receiving the data records and for enriching the data records by providing further information including a subscriber identity identifier for each subscriber identity value, an OnLine Analytical Processing (OLAP) cube generator coupled to the data record enrichment module for generating an OLAP cube allowing a selected subset of the enriched data records to be accessed based on a desired combination of type of service values and/or subscriber identity identifiers, a processing module coupled to the OLAP cube generator for accessing the selected subset of enriched data records and for performing an aggregation function for at least one predetermined measure on the accessed enriched data records, and a user interface coupled to the processing module for allowing a user to select the subset of enriched data records and for displaying the results of the aggregation function for the selected subset.

The predetermined measure may comprise one or more measures taken from the following group:
volume of service usage;
frequency of service usage;
handset manufacturers, models and/or software revisions;
subscriber countries and/or networks; and
requested and/or allocated Radio Access Bearer Quality of Service parameters for calls.

Each data record may further include a handset identity value, which may comprise an International Mobile Equipment Identifier (IMEI), with the enriched data record including handset and manufacturer identifiers for each IMEI, or may comprise a Wireless Application Protocol (WAP) User Agent, with the enriched data record including handset and manufacturer identifiers for each WAP User Agent.

The subscriber identity value may comprise one or more subscriber identity values taken from the following group:
Access Point Name (APN);
International Mobile Subscriber Identity (IMSI);
Mobile Station Integrated Services Digital Network (MSISDN); and
a combination of one or more of:
   GPRS Tunneling Protocol (GTP) Internet Protocol address;
   Application Port; and
   Uniform Resource Identifier (URI).

The apparatus may further comprise an enriched data record retrieval module coupled to the user interface for retrieving the enriched data records that form the selected subset to enable the enriched data records to be further analyzed.

The apparatus may further comprise a data record retrieval module coupled to the user interface for retrieving the data records on which are based the enriched data records that form the selected subset to enable the data records to be further analyzed.

At least one of the plurality of probes may be coupled to at least one of an UMTS lub (lubis) interface and an UMTS lu interface.

According to a fourth aspect, the invention provides an apparatus for monitoring call-based handover performance in a telecommunications network having a radio access network (RAN) portion and a core network (CN) portion, the apparatus comprising a plurality of probes for monitoring messages at the RAN portion of the telecommunications network a data record builder in communication with the plurality of probes for building data records from the monitored messages, each data record including a time value and at least one location area value, a data record enrichment module coupled to the data record builder for receiving the data records and for enriching the data records by providing further information including a location area identifier for each location area value, an OnLine Analytical Processing (OLAP) cube generator coupled to the data record enrichment module for generating an OLAP cube allowing a selected subset of the enriched data records to be accessed based on a desired combination of time values and/or location area identifiers, a processing module coupled to the OLAP cube generator for accessing the selected subset of enriched data records and for performing an aggregation function for at least one type of transfer between one location and another on the accessed enriched data records, and a user interface coupled to the processing module for allowing a user to select the subset of enriched data records and for displaying the results of the aggregation function for the selected subset.

Each data record may further include a handset identity value, which may comprise an International Mobile Equipment Identifier (IMEI), with the enriched data record including handset and manufacturer identifiers for each IMEI, or may comprise a Wireless Application Protocol (WAP) User Agent, with the enriched data record including handset and manufacturer identifiers for each WAP User Agent.

Each data record may further include at least one cell identity value.

At least one type of transfer may comprise a handover for an active or an idle subscriber, wherein a handover for an idle subscriber may comprises a cell reselection.

The apparatus may further comprise a data record retrieval module coupled to the user interface for retrieving the data records on which are based the enriched data records that form the selected subset to enable the data records to be further analyzed.

At least one of the plurality of probes may be coupled to at least one of an UMTS lub (lubis) interface and an UMTS lu interface.

According to a further aspect, the invention provides a method of analyzing data records in a telecommunications network having a radio access network (RAN) portion and a core network (CN) portion, the method comprising the steps of monitoring messages at the RAN portion of the telecommunications network, building data records from the monitored messages, each data record including at least two different predetermined types of field values, enriching the data records by providing further information into the data records including at least an identifier for each predetermined type of field value in the data records, generating an OnLine Analytical Processing (OLAP) cube allowing a selected subset of the enriched data records to be accessed based on a desired combination of dimensions of types of field values and/or field value identifiers, accessing the selected subset of enriched data records, performing an aggregation function for at least one predetermined measure on the accessed enriched data records, allowing a user to select the subset of enriched data records, and displaying the results of the aggregation function for the selected subset.

The step of monitoring may comprise monitoring the messages within the RAN portion of the network and/or between the RAN and CN portions of the network.

In one embodiment, the at least two different predetermined types of field values may comprise a time value and a cause value indicative of a cause of termination of a transaction within a call for which the data record is built.

In a second embodiment, the at least two different predetermined types of field values may comprise a subscriber identity value and at least one type of service value and the predetermined measure may comprise a measure of volume of service usage.

In a further embodiment, the at least two different predetermined types of field values may comprise a time value and at least one location value and the predetermined measure may comprise a type of transfer between one location and another.

### Brief Description of the Drawings

Three embodiments of the invention will now be more fully described, by way of example, with reference to the drawings, of which:
FIG. 1 shows a schematic diagram of a telecommunications network of the type that could usefully incorporate the present invention; and
FIG. 2 shows a block diagram of a system according to an embodiment of the present invention that could be incorporated into the network of FIG. 1.

### Detailed Description of the Drawings

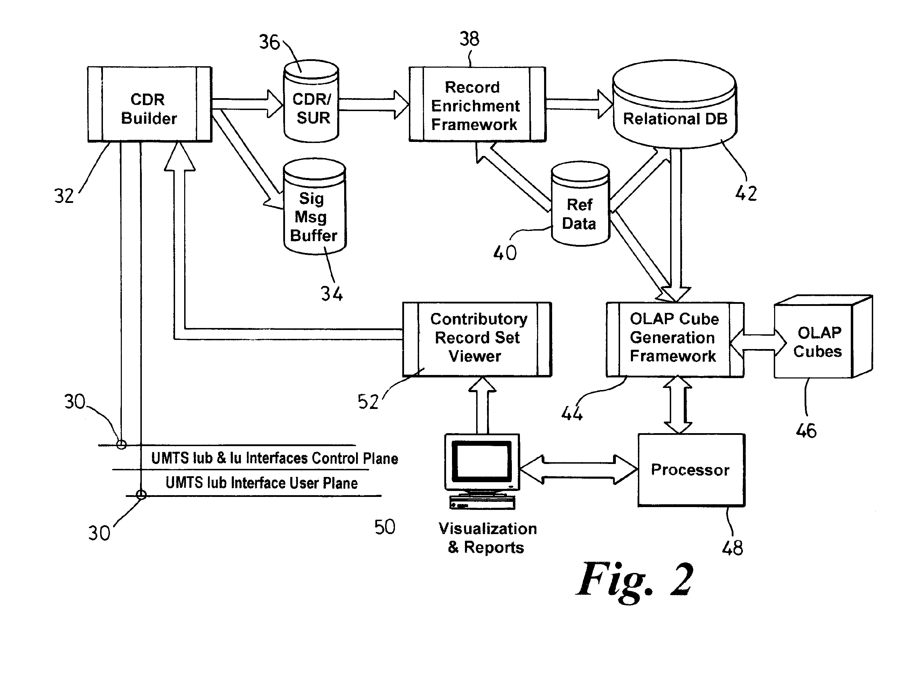

Thus, as explained above with reference to FIG. 1 a GPRS network 22 has a Core Network portion 10 and a Radio Access Network portion 12. In the first embodiment, as shown in FIG. 2, the GPRS Network is a UMTS network and a plurality of monitoring probes 30 are arranged in or adjacent to the Radio Network System portion to monitor signaling messages on the lu-PS and lu-CS interfaces (together known as lu interfaces) and on the lubis (lub) interface. These monitoring probes 30 are coupled to provide information regarding the monitored messages to a CDR builder 32, where messages relating to the same call are correlated and a Call Data Record (CDR) is built for each call. The CDR builder 32may include a protocol analyzer to enable messages having different protocols, for example in different parts of the network, to be identified and still correlated with each other into a single CDR (or SUR), as appropriate. The CDR builder is also coupled to a Signaling Message Buffer 34, where the signaling messages are temporarily stored until the CDR is complete at which point it is stored in a CDR database 36. It will be appreciated that the CDR builder 32 could itself be distributed across the network and need not be a single integrated module at a single location in the network.

A record enrichment server 38 is used to enrich the CDRs. The record enrichment server 38 takes the CDRs from the CDR database 36 and takes reference data from a reference database 40 to provide enriched fields having extra information. The enriched records are stored in a relational database 42 containing key links between the records table and the supporting reference data tables. For example, a UMTS CDR may include an IMSI value field, an International Mobile Equipment Identifier (IMEI) value field and/or various other value fields, such as TAC (formerly Type Approval Code) now described as the Type Allocation Code and FAC (Final Assembly Code). Which fields are entered in a CDR can, of course, be customizable in a particular system, providing the information can be obtained from at least some of the signaling messages being monitored on the network. The record enrichment server 42 can then compare one or more of those field values against the reference data and add handset manufacturer identifiers, handset model identifiers, handset software release identifiers and/or various other identifiers that enrich the data record with further information relating to the particular call.

The enriched records in the relational database 42 are used by an OLAP cube generation framework 44 (a Data Mining Toolkit) to automatically generate OLAP cubes 46 from the enriched records utilizing the customizable reference data entries, although, in some cases, the value fields from the original CDR could also be used. The OLAP cube 46, as is well known, provides a mechanism whereby a number of relationships can be predefined in different measure dimensions to enable query results to be quickly and efficiently displayed. Standard OLAP visualization and reporting tools can be used to provide performance metrics, highlighting signaling problems and reporting usage profiles and trends, which would otherwise not be apparent. The tools include a processor 48 for accessing the records that form a particular subset forming a query result and for performing an aggregation function on the accessed records. Thus, the OLAP cube 46 provides the framework whereby records can be accessed in different dimensions (measures) to produce subsets of records that meet the particular criteria. The processor 48 can then access the enriched records and aggregate them to provide the visualizations and reports based on the subset meeting the selected criteria. One example of such a dimension, or measure, is volume of call (or service) usage, and the enriched records selected according to other criteria can then be aggregated according to their volume of call usage. The aggregation function may be a simple addition, but may, alternatively, be some other function, such as average, or frequency, or other desired function.

These reports and visualizations are provided at a user interface 50 and allow the user to then analyze multi-dimensional problem scenarios to highlight and to drill through the data to highlight a subset of key contributory records. In fact, from the user interface, the user can either request and access the enriched records forming the selected subset visualized from the OLAP cube, or can request and access the original CDRs relating to that subset in order to be able to see the original CDRs that contributed to the subset being analyzed. In this case, the user interface is coupled to a Contributory Record Set Viewer 52 which is coupled to the CDR builder 32 and hence to the CDR database 36 and the Signaling Message Buffer 34, to access the correct CDRs.

The key contributory records forming the subset will allow the user to perform protocol decoding using the protocol analyzer of the CDR builder (or potentially another protocol analyzer) by analyzing the identified calls that contributed to the highlighted problem in the Signaling Message Buffer. The protocol decoding will highlight to the bit level the root cause of the high-level problem.

In one embodiment, the CDRs are customized to include at least a cause value field having a cause value indicative of a cause of termination of a transaction within the call for which the CDR is built. For example, within a call, there may be a number of so-called transactions between hardware elements involved in handling the call, for example when setting up a call to make sure that financial and/or security issues are checked. Each such transaction, which often involves a few messages being passed between the particular elements involved, may fail and thus terminate, thereby ending the call. The termination may, of course, be "legitimate" in the sense that the call has finished or that the call cannot proceed for perfectly good reasons, or the transaction may terminate due to errors in the transaction, in the elements or on the network. In each case, whenever a transaction is terminated, a cause value, providing an indication of the reason why the transaction terminated is entered in the cause value field. Another field that is present is a time value field, in which a value for the time at which an event in the call, such as a transaction termination, occurred. The record enrichment server then compares the cause values in the cause value field and adds a cause identifier to the enriched record. The cause identifier can provide, for example, a more informative term than simply a value code for the cause of termination of a transaction. An OLAP cube can then be automatically generated according to dimensions of time and types of cause of termination of transactions; for example, calls that terminated due to a network fault between particular hours on a particular day. The processor can then easily access the enriched records that meet these criteria and provide a total number of such call records. By changing the time range, the numbers of calls that terminated (failed) because of network faults can then be shown according to time of day or for different days, etc, enabling any trends to be quickly and easily seen on the user interface. The user can then request (drill-through to) the original CDRs making up the particular subset (and/or the enriched records), so that the records can be analyzed in more detail to try to find the reasons for the problem. Thus, the original CDRs can be analyzed to the protocol level using the CDR builder/protocol analyzer. Therefore, troubleshooting of the network to analyze problems in an end-to-end fashion can provide root cause indication with protocol message-level decoding performed on calls identified in the high-level OLAP analysis. Trends can therefore be found and highlighted in signaling problems and performance measures, which would otherwise only be suspected (or even not suspected), since such trends cannot always be determined when analyzing call records individually.

In a second embodiment of the present invention, the CDRs are customized to include subscriber identity information value fields and at least one type of service value field. The subscriber identity information values may include Application Point Names (APNs), International Mobile Subscriber Identity (IMSI), Mobile Station Integrated Services Digital Network (MSISDN), GPRS Tunneling Protocol (GTP) IP addresses, Application Ports (APs) and Universal Resource Identifiers (URIs). The type of service values may include information as to what type of call, whether voice or data, and from/to which service provider, was being requested. Handset identity values may also be provided in a handset value field. These values may include the International Mobile Equipment Identifier (IMEI) and/or a Wireless Application Protocol (WAP) User Agent, which would include information regarding the handset model being used. The record enrichment server can then pattern match, for example, the IMSI against a table in the reference database defining groupings of IMSI (i.e. groups of individual IMSIs grouped together as the same subscriber grouping; ranges of IMSIs as the same subscriber groupings; individual IMSIs as individual subscribers) to provide subscriber (grouping) information.
Handset manufacturers, models and software revisions are determined by extracting the WAP User Agent model information from data streams on the lub User Plane interface and/or IMEIs form UMTS lu and lub interface signaling messages.

The OLAP cube can then be generated and an appropriate aggregation function performed to correlate and indicate frequency and volume of service usage, handset manufacturers, handset models and software revisions, subscriber countries and networks, and requested and allocated Radio Access Bearer (RAB) Quality of Service (QoS) parameters for calls. RAB QoS can be calculated from key Quality of Service parameters (e.g. Allocation Retention Priority, Transfer Delay, Guaranteed Bit Rate, Traffic Handling Priority). Throughput can be determined from the IP data transferred on the User Plane of the UMTS lub or luPS interfaces. Thus, trends in subscriber profiles on the UMTS network can be determined, thereby providing insight into the types and distribution of subscribers on the network, the type and distribution of roamers on the network, the packet switched service usage (overall and by particular subscriber groupings), the circuit switched service usage (overall and by particular subscriber groupings), allocation of RAB QoS and throughput requirements for specific subscriber groupings, and into the handsets in use on the network and the circuit switched and packet switched services utilized by them.

In a further embodiment, subscriber profiles for call-based handover performance, whether for active subscribers, or for idle subscriber transfers (cell reselection) can be monitored and analyzed. In this embodiment, the CDRs have at least a time value field and a location area value field. Cell identification value fields and handset identification value fields may also be present. The record enrichment server can identify the type of handover, for example, 3G to 2G, 2G to 3G or 3G to 3G) by looking up the source and destination location area values against a table defining groupings of location area codes (including the type of network each location area code resides in).

The OLAP cube can then be generated and an appropriate aggregation function performed to correlate and indicate number and frequency of 3G to 2G handovers, number and frequency of 2G to 3G handovers, number and frequency of 3G to 3G handovers, handover-handback thrashing, and usage profiles prior to active handovers indicated against, for example, allocated RAB QoS parameters for calls, throughput for calls, duration of calls, and Cell Identifiers. Again, subscriber groupings can be identified by pattern matching IMSI values, as described above. Similarly RAB QoS can be calculated as described above, as can throughput. The average number of each type of handover per time period for a call can then be calculated and visualizations including max, min, mean, standard deviation, etc, of the average number of each type of handover against key dimensions of time, RAB QoS, Cell ID, and various throughput and duration measures can be provided at the user interface.

Thus, trends in subscriber profiles for cell reselections (idle) and handovers (active) on GSM, GPRS and/or UMTS networks can be determined, thereby providing insight into the impact on customer experiences and network performance of network coverage and cell reselections/handovers. This can highlight potential revenue loss from important customers being handed-off from 3G to 2G or other lower-value networks, as well as potential important customer dissatisfaction due to poor network service coverage, handover-handback thrashing and disruption to service whilst active. Cell reselection and handover problem areas at the cell level can also be determined by correlating Cell Identifiers with cell reselections/handovers. GSM RAN and UMTS RAN will indicate the coverage problem areas.

It will be appreciated that although three particular embodiments of the invention have been described in detail, various modifications and improvements can be made by a person skilled in the art without departing from the scope of the present invention. It will be appreciated, for example, that the three embodiments, although described separately, can be combined in a single system, Furthermore, other embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or nonvolatile, such as semiconductor, magnetic, optical or other memory device.

## Claims

1. An apparatus for analyzing data records in a telecommunications network having a radio access network (RAN) portion and a core network (CN) portion, the apparatus comprising:
a plurality of probes for monitoring messages at the RAN portion of the telecommunications network;
a data record builder in communication with the plurality of probes for building data records from the monitored messages, each data record including at least two different predetermined types of field values;
a data record enrichment module coupled to the data record builder for receiving the data records and for enriching the data records by providing further information into the data records including at least an identifier for each predetermined type of field value in the data records;
an OnLine Analytical Processing (OLAP) cube generator coupled to the data record enrichment module for generating an OLAP cube allowing a selected subset of the enriched data records to be accessed based on a desired combination of dimensions of types of field values and/or field value identifiers;
a processing module coupled to the OLAP cube generator for accessing the selected subset of enriched data records and for performing an aggregation function for at least one predetermined measure on the accessed enriched data records; and
a user interface coupled to the processing module for allowing a user to select the subset of enriched data records and for displaying the results of the aggregation function for the selected subset.

2. An apparatus for analyzing data records according to claim 1, wherein the plurality of probes monitors the messages within the Radio Network System (RNS) portion of a UMTS network and/or between the RNS and CN portions of the UMTS network.

3. An apparatus for analyzing data records according to claim 1 or claim 2, wherein the at least two different predetermined types of field values comprise any of:
- a time value and a cause value indicative of a cause of termination of a transaction within a call for which the data record is built;
- a subscriber identity value and at least one type of service value; and
- a time value and at least one location value.

4. An apparatus for analyzing data records according to claim 3, wherein the at least two different predetermined types of field values comprise either:
- a time value and a cause value indicative of a cause of termination of a transaction within a call for which the data record is built; or
- a subscriber identity value and at least one type of service value; and the predetermined measure comprises a measure of volume of service usage.

5. An apparatus for analyzing data records according to claim 3, wherein the at least two different predetermined types of field values comprise a time value and at least one location value, and the predetermined measure comprises a type of transfer between one location and another.

6. An apparatus for troubleshooting a telecommunications network having a radio access network (RAN) portion and a core network (CN) portion, the apparatus comprising:
a plurality of probes for monitoring messages at the RAN portion of the telecommunications network;
a data record builder in communication with the plurality of probes for building data records from the monitored messages, each data record including at least a time value and a cause value indicative of a cause of termination of a transaction within a call for which the data record is built;
a data record enrichment module coupled to the data record builder for receiving the data records and for enriching the data records by providing further information including a cause identifier for each cause value;
an OnLine Analytical Processing (OLAP) cube generator coupled to the data record enrichment module for generating an OLAP cube allowing a selected subset of the enriched data records to be accessed based on a desired combination of time values and/or cause identifiers;
a processing module coupled to the OLAP cube generator for accessing the selected subset of enriched data records and for performing an aggregation function for at least one predetermined measure on the accessed enriched data records; and
a user interface coupled to the processing module for allowing a user to select the subset of enriched data records and for displaying the results of the aggregation function for the selected subset.

7. An apparatus for troubleshooting a telecommunications network according to claim 6, wherein the predetermined measure comprises a measure of volume of service usage or a measure of subscriber groups.

8. An apparatus for troubleshooting a telecommunications network according to either claim 6 or claim 7, further comprising a data record retrieval module coupled to the user interface for performing at least one of:
- retrieving the enriched data records that form the selected subset to enable the enriched data records to be further analysed; and
- retrieving the data records on which are based the enriched data records that form the selected subset to enable the data records to be further analysed.

9. An apparatus for determining subscriber profiles in a telecommunications network having a radio access network (RAN) portion and a core network (CN) portion, the apparatus comprising:
a plurality of probes for monitoring messages at the RAN portion of the telecommunications network;
a data record builder in communication with the plurality of probes for building data records from the monitored messages, each data record including a subscriber identity value and at least one type of service value;
a data record enrichment module coupled to the data record builder for receiving the data records and for enriching the data records by providing further information including a subscriber identity identifier for each subscriber identity value;
an OnLine Analytical Processing (OLAP) cube generator coupled to the data record enrichment module for generating an OLAP cube allowing a selected subset of the enriched data records to be accessed based on a desired combination of type of service values and/or subscriber identity identifiers;
a processing module coupled to the OLAP cube generator for accessing the selected subset of enriched data records and for performing an aggregation function for at least one predetermined measure on the accessed enriched data records; and
a user interface coupled to the processing module for allowing a user to select the subset of enriched data records and for displaying the results of the aggregation function for the selected subset.

10. An apparatus for determining subscriber profiles in a telecommunications network according to claim 9, wherein the predetermined measure comprises one or more measures taken from the following group:
volume of service usage;
frequency of service usage;
handset manufacturers, models and/or software revisions;
subscriber countries and/or networks; and
requested and/or allocated Radio Access Bearer Quality of Service parameters for calls.

11. An apparatus for determining subscriber profiles in a telecommunications network according to either claim 9 or claim 10, wherein the subscriber identity value comprises one or more subscriber identity values taken from the following group:
Access Point Name (APN);
International Mobile Subscriber Identity (IMSI);
Mobile Station Integrated Services Digital Network (MSISDN); and
a combination of one or more of:
GPRS Tunneling Protocol (GTP) Internet Protocol address;
Application Port; and
Uniform Resource Identifier (URI).

12. An apparatus for determining subscriber profiles in a telecommunications network according to any one of claims 9 to 11, further comprising a data record retrieval module coupled to the user interface for performing at least one of:
- retrieving the enriched data records that form the selected subset to enable the enriched data records to be further analysed; and
- retrieving the data records on which are based the enriched data records that form the selected subset to enable the data records to be further analysed.

13. An apparatus for monitoring call-based handover performance in a telecommunications network having a radio access network (RAN) portion and a core network (CN) portion, the apparatus comprising:
a plurality of probes for monitoring messages at the RAN portion of the telecommunications network;
a data record builder in communication with the plurality of probes for building data records from the monitored messages, each data record including a time value and at least one location area value;
a data record enrichment module coupled to the data record builder for receiving the data records and for enriching the data records by providing further information including a location area identifier for each location area value;
an OnLine Analytical Processing (OLAP) cube generator coupled to the data record enrichment module for generating an OLAP cube allowing a selected subset of the enriched data records to be accessed based on a desired combination of time values and/or location area identifiers;
a processing module coupled to the OLAP cube generator for accessing the selected subset of enriched data records and for performing an aggregation function for at least one type of transfer between one location and another on the accessed enriched data records; and
a user interface coupled to the processing module for allowing a user to select the subset of enriched data records and for displaying the results of the aggregation function for the selected subset.

14. An apparatus for monitoring call-based handover performance in a telecommunications network according to claim 13, wherein each data record further includes at least one cell identity value.

15. An apparatus for monitoring call-based handover performance in a telecommunications network according to either claim 13 or claim 14, wherein said at least one type of transfer comprises a handover for an active or an idle subscriber.

16. An apparatus for monitoring call-based handover performance in a telecommunications network according to any one of claims 13 to 15, further comprising a data record retrieval module coupled to the user interface for retrieving the data records on which are based the enriched data records that form the selected subset to enable the data records to be further analysed.

17. An apparatus according to any one of claims 6 to 16, wherein at least one of the plurality of probes is coupled to at least one of an UMTS lub (lubis) interface and an UMTS lu interface.

18. An apparatus according to any one of claims 6 to 17, wherein each data record further includes a handset identity value.

19. A method of analyzing data records in a telecommunications network having a radio access network (RAN) portion and a core network (CN) portion, the method comprising the steps of:
monitoring messages at the RAN portion of the telecommunications network;
building data records from the monitored messages, each data record including at least two different predetermined types of field values;
enriching the data records by providing further information into the data records including at least an identifier for each predetermined type of field value in the data records;
generating an OnLine Analytical Processing (OLAP) cube allowing a selected subset of the enriched data records to be accessed based on a desired combination of dimensions of types of field values and/or field value identifiers;
accessing the selected subset of enriched data records;
performing an aggregation function for at least one predetermined measure on the accessed enriched data records;
allowing a user to select the subset of enriched data records; and
displaying the results of the aggregation function for the selected subset.

20. A method of analyzing data records according to claim 19, wherein the at least two different predetermined types of field values comprise any of:
- a time value and a cause value indicative of a cause of termination of a transaction within a call for which the data record is built;
- a subscriber identity value and at least one type of service value; and
- a time value and at least one location value.

21. A method of analyzing data records according to claim 20, wherein the at least two different predetermined types of field values comprise either of:
- a time value and a cause value indicative of a cause of termination of a transaction within a call for which the data record is built; and
- a subscriber identity value and at least one type of service value; and the predetermined measure comprises a measure of volume of service usage.

22. A method of analyzing data records according to claim 20, wherein the at least two different predetermined types of field values comprise a time value and at least one location value, and the predetermined measure comprises a type of transfer between one location and another.
